# EUROPÄISCHE PATENTSCHRIFT

(11) **EP 3 177 854 B1**
(45) Veröffentlichungstag und Bekanntmachung des Hinweises auf die Patenterteilung: **20.06.2018**
(21) Anmeldenummer: 15745490.1
(22) Anmeldetag: 03.08.2015
(51) Int. Cl.: F16H 48/00

(54) **KUPPLUNGSANORDNUNG MIT SENSOREINHEIT UND ANTRIEBSANORDNUNG MIT EINER SOLCHEN KUPPLUNGSANORDNUNG**
CLUTCH ARRANGEMENT HAVING A SENSOR UNIT AND DRIVE ARRANGEMENT HAVING SUCH A CLUTCH ARRANGEMENT
ENSEMBLE DE COUPLAGE COMPRENANT UNE UNITÉ DE CAPTEUR ET ENSEMBLE D'ENTRAÎNEMENT COMPRENANT UN ENSEMBLE DE COUPLAGE DE CE TYPE

(30) Priorität: 05.08.2014 DE 102014215449
(43) Veröffentlichungstag der Anmeldung: 14.06.2017
(73) Patentinhaber: GKN Automotive Limited, Redditch Worcestershire B98 0AJ (GB)
(72) Erfinder: HAUPT, Jan, 51515 Kürten (DE); JACOBY, Jörg, 40593 Düsseldorf (DE); SIEBENHANDL, Falk, 53173 Bonn (DE); ZAERS, Colin, 53639 Königswinter (DE); SEIDL, Holger, 53721 Siegburg (DE)
(74) Vertreter: Neumann Müller Oberwalleney & Partner Patentanwälte
(86) Internationale Anmeldenummer: PCT/EP2015/067844
(87) Internationale Veröffentlichungsnummer: WO 2016/020333

(56) Entgegenhaltungen:
- EP-A2- 1 435 479
- DE-A1-102009 056 088
- US-A1- 2003 096 673

## Beschreibung

Die Erfindung betrifft eine Kupplungsanordnung, insbesondere zum Einsatz im Antriebsstrang eines Kraftfahrzeugs, mit einer Kupplung und einem steuerbaren Aktuator zum Betätigen der Kupplung derart, dass ein erstes Kupplungsteil und ein zweites Kupplungsteil zur Übertragung eines Drehmoments optional miteinander verbunden beziehungsweise durch Öffnen wieder voneinander getrennt werden können. Derartige Kupplungsanordnung dienen zur Steuerung der Drehmomentübertragung zwischen einer Antriebsquelle und einer Antriebsachse des Kraftfahrzeugs. Die Erfindung betrifft ferner eine Antriebsanordnung mit einer solchen Kupplungsanordnung sowie mit einer Getriebeeinheit, beispielsweise ein Differentialgetriebe, welches ein eingeleitetes Drehmoment auf die zwei Seitenwellen der Antriebsachse aufteilt.

Aus der DE 10 2009 056 088 A1 ist eine Differentialanordnung mit einem Antriebsrad, einem Differentialgetriebe und einer Kupplung bekannt, die zwischen dem Antriebsrad und dem Differentialgetriebe angeordnet ist. Es sind ferner ein elektromagnetischer Aktuator zum Betätigen der Kupplung, ein Sensor zur Ermittlung von Schaltstellungen der Kupplung und ein mit dem Sensor zusammenwirkendes Geberelement vorgesehen.

Aus der US 2003/096673 A1 ist eine Anordnung mit einer Kupplung und einem Sensor bekannt. Der Sensor ist in einer hülsenförmigen Halterung aufgenommen und in Richtung eines drehenden Erfassungsobjekts der Kupplung ausgerichtet. Die hülsenförmige Halterung ist über einen Flansch mit dem Kupplungsgehäuse verbunden. Es ist vorgesehen, dass unterschiedliche Hülsen mit unterschiedlich dicken Flanschen verwendet werden können, um den gewünschten Abstand zwischen der Sensorspitze und dem drehenden Erfassungsobjekt zu erreichen.

Aus der JP 2006 046 594 A ist eine Kupplungseingriffsdetektiervorrichtung mit einem Differentialeinheit und einer Kupplungseinheit bekannt. Die Kupplungseinheit ist zwischen einem Differentialgehäuse und einem Seitenwellenrad der Differentialeinheit wirksam angeordnet und wird von einem Aktuator angesteuert. Es ist ein Sensor vorgesehen, der eine Position des beweglichen Kupplungsteiles detektieren kann.

Aus der EP 2 336 602 A2 ist ein Differentialmechanismus nach Art eines steuerbaren Sperrdifferentials bekannt. Zur Steuerung des Sperrdifferentials ist ein elektromagnetischer Aktuator vorgesehen, der mit einer Kugelrampenanordnung zusammenwirkt. Eine Sensoreinheit mit einem Sensorelement ist benachbart zum Differentialgehäuse angeordnet und erkennt eine axiale Bewegung eines sensierten Elements des Differentialmechanismus. Der Sensor ist in Form eines Hallsensors gestaltet.

Bei Anordnungen gemäß dem Stand der Technik ist der Sensor bisweilen nur schwer zu montieren und im Servicefall schwer zugänglich.

Der vorliegenden Erfindung liegt die Aufgabe zugrunde, eine Kupplungsanordnung mit einer Sensoreinheit, insbesondere zum Einsatz im Antriebsstrang eines Kraftfahrzeugs, vorzuschlagen, die eine einfache Montage und eine gute Zugänglichkeit im Servicefall ermöglicht. Die Aufgabe liegt ferner darin, eine Antriebsanordnung mit einer solchen Kupplungsanordnung vorzuschlagen.

Eine Lösung besteht in einer Kupplungsanordnung umfassend: ein Gehäuse; ein um eine Drehachse drehend antreibbares erstes Antriebsteil; ein relativ zum ersten Antriebsteil drehbares zweites Antriebsteil; eine im Leistungspfad zwischen dem ersten Antriebsteil und dem zweiten Antriebsteil angeordnete Kupplung mit einem ersten Kupplungsteil, das mit dem ersten Antriebsteil drehfest und axial beweglich verbunden ist, und einem zweiten Kupplungsteil, das mit dem zweiten Antriebsteil antriebsverbunden ist; einen steuerbaren Aktuator zum Betätigen der Kupplung durch axiales Bewegen des ersten Kupplungsteils relativ zum zweiten Kupplungsteil; eine Sensoreinheit zur Ermittlung eines die axiale Position des ersten Kupplungsteils repräsentierendes Positionssignals, wobei die Sensoreinheit einen zumindest mittelbar mit dem ersten Kupplungsteil verbundenes Geberelement und einen Sensor zum Erfassen einer Position des Geberelements aufweist, wobei der Sensor an dem Gehäuse lösbar verbunden ist; sowie Einstellmittel zum Einstellen der Position des Sensors relativ zum Gehäuse, wobei die Einstellmittel ein Einstellelement und zumindest ein Fixierelement aufweisen, wobei das Einstellelement einen Hülsenabschnitt hat, der mit einer zylindrischen Außenfläche in einer Bohrung des ortsfesten Gehäuses drehbar einsitzt, und eine gegenüber der zylindrischen Außenfläche exzentrische Durchgangsbohrung, in welcher der Sensor eingesteckt ist, wobei das Einstellelement mittels des Fixierelements in mehreren Drehpositionen mit dem ortsfesten Gehäuse verbindbar ist.

Ein Vorteil besteht darin, dass der Sensor der Sensoreinheit einfach montierbar und von außen am Gehäuse zugänglich ist. Im Servicefall kann der Sensor als separates Bauteil auf einfache Weise ausgetauscht werden. Mit Hilfe der Einstellmittel lässt sich die Position des Sensors relativ zum Gehäuse und damit zum Geberelement genau einstellen. Hieraus folgt, dass eine axiale Bewegung des Geberelements vom Sensor zuverlässig detektiert wird. Das Geberelement ist zumindest mittelbar mit dem ersten Kupplungsteil verbunden. Hiermit soll begrifflich mit umfasst sein, dass das Geberelement unmittelbar mit dem ersten Kupplungsteil verbunden sein kann, oder mittelbar über ein oder mehrere Zwischenelemente. In jedem Fall ist die Verbindung derart, dass sich das Geberelement bei Betätigung der Kupplung gemeinsam mit dem ersten Kupplungsteil bewegt.

Vorzugsweise ist der Sensor derart angeordnet, dass eine Längsachse des Sensors innerhalb eines Winkelbereichs von ± 30°, insbesondere innerhalb eines Bereichs von ± 20° oder auch von ± 10°, in Bezug auf eine zur Drehachse senkrechte Ebene angeordnet ist. Nach einer konkreten Möglichkeit kann der Sensor derart mit dem ortsfesten Gehäuse verbunden sein, dass die Sensorachse radial zur Drehachse verläuft, wobei eine Anordnung nicht ausgeschlossen ist, bei der die Sensorachse die Drehachse mit Abstand kreuzt. Ein Vorteil einer im Wesentlichen rechtwinkligen Anordnung des Sensors relativ zur Drehachse besteht darin, dass ein Geberelement mit einer verhältnismäßig kleinen Radialerstreckung verwendet werden kann, was sich wiederum günstig auf den Wirkungsgrad und die Schaltzeiten der Kupplung auswirkt. Außerdem kann der Sensor auf eine Umfangsfläche des Geberelements gerichtet werden.

Die Einstellmittel dienen zum Einstellen der Position des Sensors relativ zum Gehäuse in montiertem Zustand der Sensoreinheit. Insbesondere können die Einstellmittel prinzipiell jede Art von Mechanismus oder Vorrichtung sein, der geeignet ist, um die Position des Sensors relativ zum Gehäuse einzustellen beziehungsweise zu verändern. Insofern können die Einstellmittel auch als Einstellvorrichtung oder Einstellmechanismus bezeichnet werden. Vorzugsweise sind die Einstellmittel derart gestaltet, dass der Sensor gegenüber dem ortsfesten Gehäuse zumindest eines von radial und axial relativ zur Drehachse einstellbar ist. Hiermit ist gemeint, dass die Einstellmittel eine axiale und/oder radiale Verstellung des Sensors relativ zum ortsfesten Gehäuse ermöglichen können. Nach einer bevorzugten Ausgestaltung ist die Einheit aus Sensor, Einstellmitteln und Gehäuse derart gestaltet, dass der Sensor und die Einstellmittel bei geschlossenem Gehäuse von außen zugänglich sind. Auf diese Weise kann die Position des Sensors auch bei geschlossenem Gehäuse einfach eingestellt werden. Außerdem lässt sich der Sensor gegebenenfalls austauschen, ohne das Gehäuse zu öffnen. Bei dem Gehäuse handelt es sich vorzugsweise um ein ortsfestes Gehäuse der Kupplungsanordnung, in dem das erste Antriebsteil um die Drehachse drehbar gelagert ist.

Zur radialen Verstellung können die Einstellmittel zumindest eine Distanzscheibe umfassen, welche zwischen einer Stützfläche des Sensors und einer Anlagefläche des ortsfesten Gehäuses einlegbar ist. Die Angabe radial bezieht sich dabei auf die Drehachse der Kupplungsanordnung beziehungsweise des ersten Kupplungsteils. Generell soll vorliegend gelten, dass jede räumliche Angabe wie radial oder axial auf die Drehachse der Kupplungsanordnung bezogen ist, sofern nichts anderes angegeben ist.

Zur axialen Verstellung können die Einstellmittel nach einer ersten Möglichkeit ein gegenüber dem Gehäuse drehbares Einstellelement aufweisen, in dem der Sensor aufgenommen ist, und zumindest ein Fixierelement zum Fixieren des Einstellelements in einer bestimmten Drehposition. Das Einstellelement kann einen Hülsenabschnitt aufweisen, der mit einer zylindrischen Außenfläche in einer Bohrung des ortsfesten Gehäuses drehbar einsitzt, und eine gegenüber dem Hülsenabschnitt exzentrische Durchgangsbohrung, in welcher der Sensor eingesteckt ist, wobei das Einstellelement mittels des Befestigungselements in mehreren Drehpositionen mit dem ortsfesten Gehäuse verbindbar ist. Dadurch, dass die Achse der Durchgangsbohrung relativ zur Achse des Hülsenabschnitts einen Versatz aufweist (Exzenter), führt ein Drehen des Einstellelements relativ zum Gehäuse zu einer Verlagerung des Sensors im Gehäuse in axialer Richtung der Drehachse. Dabei ist der Grad der Axialverlagerung des Sensors abhängig von der Drehstellung des Einstellelements relativ zum Gehäuse.

Das Einstellelement ist vorzugsweise derart gestaltet, dass es in verschiedenen Drehstellungen fixiert werden kann. Das Fixieren in mehreren Drehstellungen kann nach einer ersten Möglichkeit stufenlos erfolgen, was dadurch bewerkstelligt werden kann, dass das Einstellelement ein bogenförmiges Langloch aufweist, durch das ein Befestigungselement einsteckbar und mit dem Gehäuse verspannt werden kann. Nach einer alternativen zweiten Möglichkeit kann das Einstellelement derart gestaltet sein, dass eine Drehverstellung in Stufen möglich ist. Hierfür kann das Einstellelement insbesondere eine Reihe von Durchgangsbohrungen aufweisen, die bogenförmig angeordnet sind und sich insbesondere überdecken können. Eine besonders günstige Fertigung und Montage wird dadurch erreicht, dass genau ein Befestigungselement vorgesehen ist, mit dem das Einstellelement an dem Gehäuse in mehreren Drehpositionen befestigbar ist. In diesem Fall übernimmt das Befestigungselement zwei Funktionen, nämlich die Befestigung des Sensors an dem Gehäuse und die Drehfixierung des Einstellelements in der gewünschten Drehposition.

Nach einer zweiten Möglichkeit können die Einstellmittel ein axial bewegliches Einstellelement aufweisen, in dem der Sensor befestigt ist, und einen Rotations-Translations-Wandler, mit dem das Einstellelement gegenüber dem ortsfesten Gehäuse axial verschiebbar ist. Die Verstellung erfolgt in diesem Fall durch eine translatorische Bewegung des Einstellelements, anstelle einer Drehbewegung wie beim exzentrischen Einstellelement. Der Rotations-Translations-Wandler kann ein mit dem Gehäuse verbundenes Stützelement mit einer axialen Gewindebohrung aufweisen, und eine Stellschraube, welche in die Gewindebohrung eingedreht werden kann, wobei das Schraubenende mit dem Einstellelement verschiebefest verbunden ist. Durch Ein- beziehungsweise Herausdrehen der Schraube wird das Einstellelement und mit diesem der Sensor entlang des ortfesten Gehäuses vom Stützelement weg beziehungsweise auf dieses zu bewegt. Das Stützelement kann beispielsweise in Form eines an das Gehäuse angeformten nach außen weisenden Vorsprungs gestaltet sein, in dem eine Bohrung mit in Verschieberichtung verlaufender Bohrungsachse vorgesehen ist.

Vorzugsweise sind Führungsmittel vorgesehen, mit denen das Einstellelement gegenüber dem ortsfesten Gehäuse längsverschieblich geführt ist. Die Führungsmittel können jede Form von Mechanismus oder Vorrichtung sein, der eine translatorische Führung des Einstellelements relativ zum Gehäuse ermöglicht. Insofern können die Führungsmittel auch als Führungsmechanismus oder Führungsvorrichtung bezeichnet werden. Die Führungsmittel können beispielsweise ein oder mehrere sich in Verschieberichtung erstreckende Langlöcher im Einstellelement umfassen, durch das jeweils eine in das Gehäuse eingeschraubte Schraube eingreift.

Für eine spielfreie Verbindung zwischen dem verschiebbaren Einstellelement und der Stellschraube können elastische Vorspannmittel vorgesehen sein, die eine Vorspannkraft zwischen den genannten Teilen erzeugen. Die Vorspannmittel können prinzipiell jede Anordnung sein, die das Einstellelement relativ zur Stellschraube vorspannt. Insofern können die Vorspannmittel auch als Vorspannanordnung bezeichnet werden. Die Vorspannmittel können potentielle Energie speichern und wirken elastisch rückstellend. Beispielsweise können die Vorspannmittel ein elastisches Element wie eine Fede aufweisen. Das elastische Element kann koaxial zur Stellschraube angeordnet sein und mit einem ersten Ende am Einstellelement und mit einem anderen Ende am Stützelement abgestützt sein. Mit den Vorspannmitteln wird das Einstellelement gegenüber dem Gehäuse zumindest mittelbar axial vorgespannt, so dass eine genaue Positionierung ermöglicht wird.

Nach einer möglichen Ausgestaltung kann der Aktuator in Form eines elektromagnetischen Aktuators gestaltet sein und weist einen ringförmigen Elektromagneten aufweisen, der an dem ortsfesten Gehäuse abgestützt ist, und einen axial beweglichen Kolben, der mit dem ersten Kupplungsteil wirkverbunden ist. Der Elektromagnet kann ein Magnetgehäuse mit einem größten Außendurchmesser aufweisen, wobei ein größter Außendurchmesser des Geberelements kleiner sein kann als der Außendurchmesser des Magnetgehäuses. Alternativ oder in Ergänzung kann vorgesehen sein, dass der größte Außendurchmesser des Signalgebers kleiner ist als der Fußkreisdurchmesser eines mit dem ersten Antriebsteil verbundenen Ringrads. Besonders günstig ist es, wenn das Geberelement eine möglichst kleine Radialerstreckung beziehungsweise Durchmesser aufweist. Denn, durch ein kleines Geberelement werden Planschverluste gering gehalten, was den Wirkungsgrad der Kupplung vorteilhaft beeinflusst, und die Ölverdrängung ist gering, was wiederum besonders kurze Schaltzeiten der Kupplung ermöglicht. Es versteht sich jedoch, dass der Außendurchmesser des Geberelements auch größer sein kann, als der Außendurchmesser des Magnetgehäuses beziehungsweise des Fußkreisdurchmessers des Ringrads.

Eine Lösung der oben genannten Aufgabe besteht weiter in Antriebsanordnung, insbesondere für eine elektromotorisch antreibbare Antriebsachse eines Kraftfahrzeugs, umfassend eine Kupplungsanordnung, die nach zumindest einer der oben genannten Ausführungsformen gestaltet ist; ein Differentialgetriebe mit Ausgleichsrädern und Seitenwellenrädern; wobei das erste Antriebsteil in Form eines Differentialgehäuses und das zweite Antriebsteil in Form eines Differentialträgers gestaltet sind, mit dem die Ausgleichsräder verbunden sind.

Mit der erfindungsgemäßen Antriebsanordnung ergeben sich in analoger Weise dieselben Vorteile wie mit der erfindungsgemäßen Kupplungsanordnung, so dass diesbezüglich auf obige Beschreibung verwiesen wird. Aufgrund der konkreten Ausgestaltung des Sensors ist eine einfache Montage, eine genaue Sensierung der Kupplungsposition und im Service-Fall eine einfache Austauschbarkeit des Sensors gegeben. Durch die Einstellbarkeit der Sensorposition wird eine genaue Erfassung des Wegsignals ermöglicht, was wiederum eine exakte und schnelle Ansteuerung der Antriebsanordnung ermöglicht.

Die Antriebsanordnung kann zum Antrieb insbesondere einen Elektromotor umfassen, wobei die so gebildete Einheit auch als Elektroantrieb bezeichnet werden kann. Im Leistungspfad zwischen dem Elektromotor und der Antriebsanordnung kann ein Untersetzungsgetriebe, mit und ohne Schaltstufe, zwischengeschaltet sein. Es versteht sich, dass zum Antrieb auch jede andere Form von Motor verwendet werden kann, beispielsweise ein Verbrennungsmotor.

Bevorzugte Ausführungsformen werden nachstehend anhand der Zeichnungsfiguren erläutert. Hierin zeigt:
- Figur 1: eine erfindungsgemäße Kupplungsanordnung im Längsschnitt in einer ersten Ausführungsform;
- Figur 2: die Sensoreinheit der Kupplungsanordnung nach Figur 1 als Einzelheit in perspektivischer Ansicht;
- Figur 3: das Einstellelement aus Figur 1 und Figur 2 als Einzelheit
A) in Draufsicht;
B) in Seitenansicht;
C) in perspektivischer Ansicht;
- Figur 4: ein Einstellelement für eine erfindungsgemäße Kupplungsanordnung in einer alternativen Ausführungsform in perspektivischer Ansicht;
- Figur 5: eine erfindungsgemäße Kupplungsanordnung im Halblängsschnitt in einer abgewandelten weiteren Ausführungsform;
- Figur 6: eine erfindungsgemäße Kupplungsanordnung im Längsschnitt in einer weiteren Ausführungsform;
- Figur 7: weitere Details der Sensoreinheit der Kupplungsanordnung aus Figur 6 im Einbauzustand
A) im Längsschnitt durch die Kupplungsanordnung;
B) in Draufsicht auf die Sensoreinheit;
- Figur 8: die Sensoreinheit aus Figur 6 und 7 als Einzelheit
A) in Draufsicht;
B) in Seitenansicht;
C) im Längsschnitt gemäß Schnittlinie C-C aus Figur 8B;
- Figur 9: eine erfindungsgemäße Kupplungsanordnung in einer abgewandelten weiteren Ausführungsform im Halblängsschnitt;
- Figur 10: eine erfindungsgemäße Kupplungsanordnung in einer weiteren Ausführungsform im Längsschnitt;
- Figur 11: die Sensoreinheit der Kupplungsanordnung aus Figur 10 als Einzelheit
A) in Draufsicht;
B) in Seitenansicht;
C) gemäß Schnittlinie 11C-11C aus Figur 11B;
D) gemäß Schnittlinie 11D-11D aus Figur 11A;
E) gemäß Schnittlinie 11E-11E aus Figur 11A;
F) das Detail 11F aus Figur 11C;
- Figur 12: schematisch eine erfindungsgemäße Kupplungsanordnung gemäß Figur 5 als Teil eines Elektroantriebs.

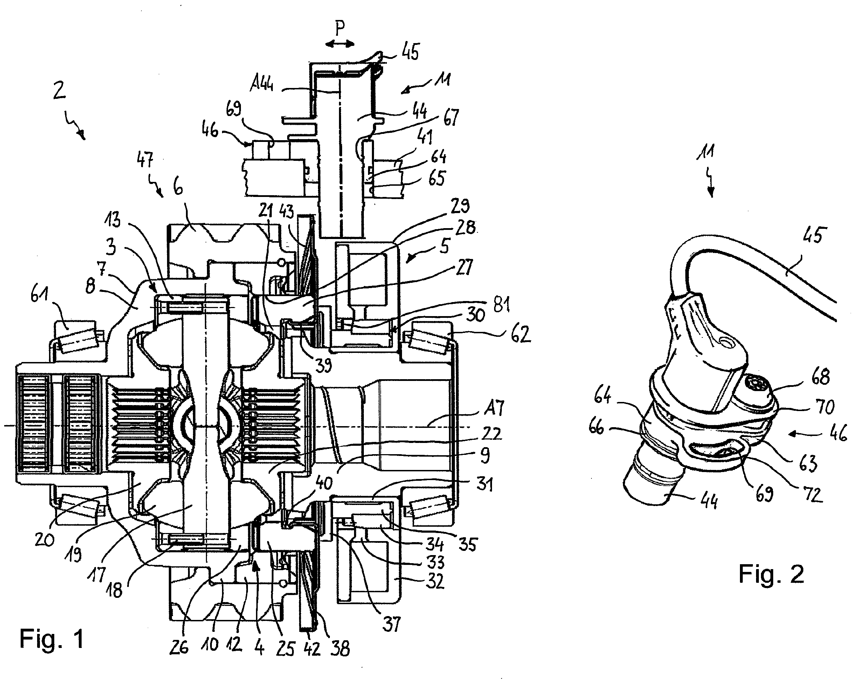

Die Figuren 1 bis 3, welche im Folgenden gemeinsam beschrieben werden, zeigen eine erfindungsgemäße Kupplungsanordnung 2 in einer ersten Ausführungsform. Die Kupplungsanordnung 2 umfasst eine Kupplung 4, einen Aktuator 5 zum Betätigen der Kupplung 4 und eine Sensoreinheit 11. Die Kupplung 4 kann wahlweise Drehmoment auf eine im Leistungspfad nachgeschaltete Getriebeeinheit 3 übertragen. Die Getriebeeinheit 3 ist in Form eines Differentialgetriebes gestaltet, ohne hierauf eingeschränkt zu sein. Die Kupplungsanordnung 2 mit Getriebeeinheit 3, welche gemeinsam auch als Antriebsanordnung 47 bezeichnet werden können, dient zum Einsatz im Antriebsstrang eines Kraftfahrzeugs, und zwar zur Verteilung eines eingeleiteten Drehmoments auf die beiden Seitenwellen des Kraftfahrzeugs, wobei eine Drehmomentübertragung zwischen einer Antriebsquelle des Kraftfahrzeugs und den Seitenwellen mittels der Kupplung 4 nach Bedarf optional hergestellt oder unterbrochen werden kann. Die Betätigung der Kupplung 4 erfolgt mittels des Aktuators 5, welcher auf das erste Kupplungsteil 25 einwirkt.

Die Kupplung 4 ist im Leistungspfad zwischen einem ersten Antriebsteil 7 und einem zweiten Antriebsteil 13 angeordnet. Das erste Antriebsteil 7 ist in Form eines drehend antreibbaren Gehäuses gestaltet, in dem die Kupplung 4 aufgenommen ist. Insofern kann das erste Antriebsteil 7 auch als Kupplungsgehäuse bezeichnet werden. Das zweite Antriebsteil ist in Form eines Trägerelements 13 der Getriebeeinheit 3 gestaltet, das drehbar in dem Kupplungsgehäuse aufgenommen ist. Das Kupplungsgehäuse 7 ist mit einem Antriebsrad 6 fest verbunden, insbesondere mittels Schweißen, wobei auch andere Verbindungsarten wie Schraubverbindungen denkbar sind. Über das Antriebsrad 6 kann Drehmoment von einem hier nicht dargestellten Antriebsmotor in die Antriebsanordnung 47 zum Antreiben des Differentialgetriebes 3 eingeleitet werden. Das Kupplungsgehäuse 7 ist zweiteilig aufgebaut und umfasst ein erstes Gehäuseteil 8 und ein zweites Gehäuseteil 9, die im Bereich ihrer öffnungsseitigen Enden jeweils einen Flanschabschnitt 10, 12 aufweisen, mit dem sie mit dem Antriebsrad 6 verbunden sind. Das Differentialgetriebe 3 ist in dem Kupplungsgehäuse 7 aufgenommen und um die Drehachse A7 drehbar gelagert. Das Kupplungsgehäuse 7 ist mittels Lagermitteln 61, 62 um die Drehachse A7 in dem ortsfesten Gehäuse 41 drehbar gelagert.

Das Trägerelement 13 des Differentialgetriebes 3 ist ringförmig gestaltet und weist eine im wesentlichen zylindrische Außenfläche 14 auf, mit der das Trägerelement 13 gegenüber einem entsprechenden innenzylindrischen Abschnitt 15 des Kupplungsgehäuses 7 um die Drehachse A7 drehbar gelagert ist. In dem Trägerelement 13 sind zwei Bohrungen vorgesehen, in die ein Zapfen 17 eingesteckt und mittels eines Sicherungsstifts 18 fixiert ist. Auf dem Zapfen 17 sind zwei Differentialräder 19 um eine Zapfenachse drehbar gelagert. Die beiden Differentialräder 19 sind mit einem ersten und einem zweiten Seitenwellenrad 20, 22 in Verzahnungseingriff, die koaxial zur Drehachse A7 angeordnet sind. Die beiden Seitenwellenräder 20, 22 haben jeweils eine Längsverzahnung 23, in die eine entsprechende Gegenverzahnung einer Seitenwelle (nicht dargestellt) zur Drehmomentübertragung eingesteckt werden kann. Die beiden Seitenwellenräder 20, 22 sind jeweils gegenüber dem Gehäuse 7 über reibungsmindernde Scheiben axial abgestützt.

Die Kupplung 4 ist als formschlüssige Kupplung gestaltet, insbesondere als Zahnkupplung, wobei auch andere Kupplungen verwendet werden können, beispielsweise eine Klauenkupplung oder eine Reibungskupplung. Die formschlüssige Kupplung 4 umfasst ein erstes Kupplungsteil 25, das mit dem Gehäuse 7 drehfest und axial beweglich verbunden ist, sowie ein zweites Kupplungsteil 26, das mit dem Trägerelement 13 fest verbunden ist. Das erste Kupplungsteil 25 ist relativ zum zweiten Kupplungsteil 26 axial beweglich und kann zur Übertragung eines Drehmoments in dieses eingerückt werden, so dass eine formschlüssige Verbindung zwischen den beiden Kupplungsteilen 25, 26 entsteht. Durch erneutes Ausrücken des ersten Kupplungsteils 25 kann die Drehmomentübertragung wieder unterbrochen werden.

Das erste Kupplungsteil 25 hat einen Ringabschnitt 21, der innerhalb des Kupplungsgehäuses 7 angeordnet ist, und mehrere über den Umfang verteilte Nockenelemente 27, die sich von dem Ringabschnitt 21 aus in axiale Richtung erstrecken. Die Nockenelemente 27 können auch als axiale Ansätze bezeichnet werden. Die Nockenelemente 27 greifen zur Drehmomentübertragung durch umfangsverteilte Öffnungen 28 des Gehäuses 7 hindurch, so dass das erste Kupplungsteil 25 gemeinsam mit dem drehend antreibbaren Gehäuse 7 rotiert. Das erste Kupplungsteil 25 ist relativ zum Gehäuse 7 axial geführt und koaxial zur Drehachse A7 zentriert. Die Führung und Zentrierung erfolgt über Flächenpaarungen, die jeweils zwischen einer Außenfläche eines Nockenelements 27 und einer Innenfläche einer zugehörigen Gehäuseöffnung gebildet sind. Alternativ kann die Zentrierung auch über eine zylindrische Außenfläche des Ringabschnitts 21 gegenüber der Innenfläche des Gehäuses 7 gebildet sein.

An den einander zugewandten Stirnseiten haben das erste und zweite Kupplungsteil 25, 26 jeweils angeformte Formschlusselemente, welche zur Drehmomentübertragung miteinander in Eingriff bringbar sind. Durch Ansteuern des Aktuators 5 kann das erste Kupplungsteil 25 relativ zum zweiten Kupplungsteil 26 axial bewegt werden, wobei eine Drehmomentübertragung vom Antriebsrad 6 auf das Differentialgetriebe 3 in eingerücktem Zustand gewährleistet ist, während die Drehmomentübertragung in ausgerücktem Zustand unterbrochen ist.

Der Aktuator 5 umfasst einen Elektromagneten 29 sowie einen Kolben 30. Dabei ist der Aktuator 5 so gestaltet, dass der Kolben 30 bei Bestromen des Elektromagneten 29 in Richtung Kupplung 4 beaufschlagt wird. Hierfür hat der Elektromagnet 29 ein ringförmiges Magnetgehäuse 32, das eine Spule umgibt und an einem radial inneren und der Kupplung 4 zugewandten Ende eine Öffnung 33 aufweist. Innerhalb eines radial inneren Gehäuseabschnitts ist der Kolben 30 axial bewegbar angeordnet. Das Magnetgehäuse 32 ist mittels eines Trägerelements 31 auf einem Hülsenansatz des Gehäuseteils 9 gelagert und über Befestigungsmittel (nicht dargestellt) an dem ortsfesten Gehäuse 41 abgestützt.

Der Kolben 30 umfasst ein erstes Kolbenteil 34 aus einem ferromagnetischen Werkstoff, beispielsweise einem Eisenwerkstoff, sowie ein zweites Kolbenteil 35 aus einem nicht-magnetischen oder paramagnetischen Werkstoff, beispielsweise aus Edelstahl, Kupfer oder Aluminium. Das erste Kolbenteil 34 und das zweite Kolbenteil 35 sind hülsenförmig gestaltet und miteinander verbunden, insbesondere durch eine Pressverbindung. Dadurch, dass das erste Kolbenteil 34 aus einem ferromagnetischen Werkstoff hergestellt ist, wird es bei Betätigen des Elektromagneten 29 aufgrund des Magnetfelds in Richtung der Kupplung 4 bewegt. Insofern kann das erste Kolbenteil 34 auch als Anker bezeichnet werden. Durch die axiale Verschiebung des ersten Kolbenteils 34 wird der Spalt 33 überbrückt. In der Endposition kommt das erste Kolbenteil 34 gegen eine Schulter 81 des Magnetgehäuses 32 zur Anlage. Das zweite Kolbenteil 35 ist paramagnetisch, damit eine ungewünschte Magnetflussleckage auf andere Bauteile verhindert wird.

Das erste Kolbenteil 34 ist mit einer Außenfläche gegenüber einer Innenfläche des Magnetgehäuses 32 zentriert und axial verschiebbar angeordnet. Um ein ungewünschtes Anhaften des Kolbens 30 an dem Magnetgehäuse 32 zu verhindern, kann die Außenfläche des ersten Kolbenteils 34 mit einer reibungsmindernden Gleitschicht beschichtet sein. Das zweite Kolbenteil 35 ist axial länger als das erste Kolbenteil 34 und hat eine Stirnseite, die mit einem Gleitring 37 in Anlage ist. Der Gleitring 37 ist wiederum mittelbar gegenüber dem ersten Kupplungsteil 25 axial abgestützt, und zwar über ein Geberelement 38. Die Bewegung des Geberelements 38 wird vom Sensor 44 erfasst. Das Geberelement 38, das insofern auch als Mess- oder Sensierobjekt bezeichnet werden kann, ist insbesondere in Form einer Ringscheibe gestaltet, die mit dem ersten Kupplungsteil 25 verbunden ist. Hierfür hat die Ringscheibe radial innen mehrere über den Umfang verteilte und sich in axialer Richtung erstreckende federnde Rastelemente 39, die mit ihren Enden in eine oder mehrere entsprechende Hinterschneidungen 40 des ersten Kupplungsteils 25 formschlüssig eingreifen. Die Ringscheibe 38 hat an ihrem radial außen liegenden Ende einen zylindrischen Mantelabschnitt 42. Zwischen dem Kupplungsgehäuse 7, beziehungsweise dem zweiten Gehäuseteil 9, und dem Geberelement 38 ist eine Rückstellfeder 43 angeordnet. Die Rückstellfeder 43 ist vorliegend in Form einer Tellerfeder gestaltet, wobei auch andere Arten von Federn, beispielsweise Schraubenfedern, eingesetzt werden können.

Es ist ein Sensor 44 vorgesehen, der mit dem Geberelement 38 zusammenwirkt derart, dass der Sensor eine axiale Position des Geberelements erfassen und an eine elektronische Regeleinheit (nicht dargestellt) weitergeben kann. Sensor 44 und Geberelement 38 sind Teile der Sensoreinheit 11. Der Sensor 44 ist in Form eines Hallsensors gestaltet, der den Abstand zum Geberelement 38 berührungslos erfassen kann. Es kann aber auch ein anderer berührungsloser Sensor eingesetzt werden, beispielsweise ein induktiver Sensor. Der Sensor 44 ist von außen in das ortsfeste Gehäuse 41 eingesetzt und mit diesem lösbar verbunden. Zum Verbinden mit der elektronischen Regeleinheit ist ein Anschlusskabel 45 vorgesehen. In der elektronischen Regeleinheit werden die Sensorsignale weiterverarbeitet und der Abstand zwischen Geberelement 38 und Sensor 44 ermittelt. Hieraus werden Zustandsgrößen über den Schaltzustand der Kupplung 4 ermittelt, welche zur Steuerung des Antriebsmotors verwendet werden können.

Es ist erkennbar, dass der Sensor 44 mit seiner Sensorachse A44 in Bezug auf die Drehachse A7 rechtwinklig beziehungsweise radial angeordnet ist. Um den Sensor 44 relativ zum Geberelement 38 einzustellen, sind Einstellmittel 46 vorgesehen, auf die im Folgenden näher eingegangen wird. Die Einstellmittel sind als Mechanismus oder Vorrichtung gestaltet, mit dem die Position des Sensors relativ zum Gehäuse variiert beziehungsweise eingestellt werden kann. Insofern können die Einstellmittel auch als Einstellvorrichtung oder Einstellmechanismus bezeichnet werden. Die Einstellmittel 46 sind vorliegend derart gestaltet, dass der Sensor 44 gegenüber dem ortsfesten Gehäuse 41 radial und/oder axial in Bezug auf die Drehachse A7 einstellbar ist. Zur radialen Verstellung kann eine Distanzscheibe (nicht dargestellt) verwendet werden, welche zwischen einer Stützfläche des Sensors 44 und einer Anlagefläche des ortsfesten Gehäuses 41 einlegbar ist. Eine solche Distanzscheibe zur radialen Einstellung des Abstands zwischen Sensor 44 und Geberelement 38 ist optional und nur dann nötig, wenn der gegebene radiale Abstand noch nicht einem vorgegebenen Wert entspricht.

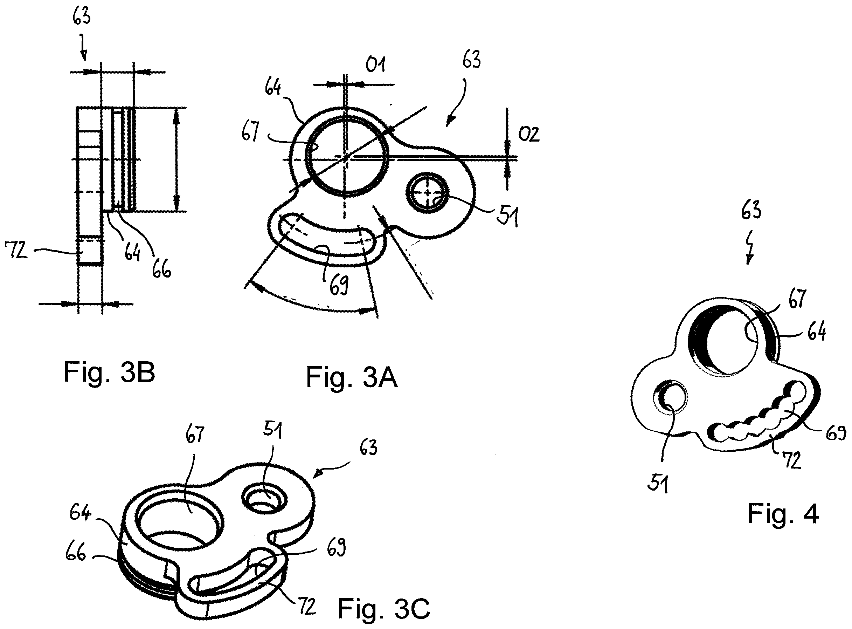

Die Einheit aus Sensor 44 und Einstellmitteln 46 der Figur 1 ist als Einzelheit in Figur 2 gezeigt. In der vorliegenden Ausführungsform umfassen die Einstellmittel 46 ein gegenüber dem Gehäuse 41 drehbares Einstellelement 63, welches im Detail in den Figuren 3A bis 3C gezeigt ist, und ein Fixierelement, mit dem das Einstellelement 63 gegenüber dem Gehäuse 41 in der gewünschten Drehposition fixiert werden kann. Das Einstellelement 63 hat einen Hülsenabschnitt 64, mit dem das Einstellelement 63 in einer Bohrung 65 des ortsfesten Gehäuses 41 drehbar einsitzt. Der Hülsenabschnitt 64 weist eine zylindrische Außenfläche mit einer umlaufenden Ringnut 66 zum Einsetzen eines Dichtrings (nicht dargestellt) und eine Durchgangsbohrung 67 mit einer zylindrische Innenfläche auf. Die Achsen der Außen- und Innenflächen haben einen Versatz O1, 02 (Offset) zueinander, beziehungsweise sind exzentrisch zueinander angeordnet. Insofern können der Hülsenabschnitt 64 auch als Exzenter, und das Einstellelement 63 auch als Exzenterelement bezeichnet werden. Der Sensor 44 ist in die Durchgangsbohrung 67 des Exzenterelements 63 eingesteckt. Zur Befestigung des Sensors 44 am Einstellelement 63 ist eine Schraube 68 vorgesehen, die in eine Gewindebohrung 51 im Exzenterelement 63 eingeschraubt ist. Das Exzenterelement 63 kann gegenüber dem ortfesten Gehäuse 41 in mehreren Drehpositionen fixiert werden. Dadurch, dass die Durchgangsbohrung 67 relativ zur Außenfläche des Hülsenabschnitts 64 versetzt ist, führt eine Drehbewegung des Exzenterelements 63 relativ zum Gehäuse 41 zu einer Verlagerung des Sensors 44 im Gehäuse in axialer Richtung.

Das Exzenterelement 63 hat ein bogenförmiges Langloch 69 das sich im Wesentlichen koaxial zur Außenfläche des Hülsenabschnitts 64 erstreckt. Ist die gewünschte axiale Position des Sensors 44 durch Verdrehen des Exzenterelements 46 erreicht, wird letzteres mittels eines Fixierelements in Form einer Schraube (nicht dargestellt) am Gehäuse 41 fixiert. Hierfür wird die Schraube durch das Langloch 69 hindurchgeführt und in eine Gewindebohrung im ortfesten Gehäuse 41 eingeschraubt. Mit der Ausgestaltung in Form eines Langlochs 69 ermöglicht das Exzenterelement 63 in der vorliegenden Ausführungsform eine stufenlose Drehverstellung und Fixierung gegenüber dem Gehäuse 41. Das Exzenterelement 63 ist insbesondere so gestaltet, dass durch das Verdrehen relativ zum Sensor 44 beziehungsweise relativ zum ortsfesten Gehäuse 41 eine axiale Verstellbarkeit des Sensors 44 relativ zum Geberelement 38 von bis zu ± 0,5 mm gegeben ist. Auf diese Weise lässt sich der Sensor 44 exakt positionieren, was wiederum zu einem genauen Detektieren der Kupplungsposition führt. Diese axiale Verstellbarkeit ist in Figur 1 symbolisch mit einem Pfeil P eingezeichnet.

In Figur 4 ist ein Exzenterelement 63 in einer alternativen Ausführungsform gezeigt, das derjenigen aus Figur 3 weitestgehend entspricht, so dass hinsichtlich der Gemeinsamkeiten auf die obige Beschreibung Bezug genommen wird. Dabei sind gleiche beziehungsweise abgewandelte Einzelheiten mit den gleichen Bezugszeichen versehen, wie in Figur 3. Der einzige Unterschied des Exzenterelements nach Figur 4 besteht darin, dass anstelle eines Langlochs eine Reihe von mehreren Durchgangsbohrungen 69 vorgesehen ist. Die Bohrungsachsen liegen im Wesentlichen auf einem Radius um die Achse der Hülsenaußenfläche 64. Es ist erkennbar, dass die einzelnen Bohrungen 69 sich in Umfangsrichtung überdecken. Je nach Drehstellung des Exzenterelements 63 kann die Befestigungsschraube nach Bedarf durch jede einzelne der Bohrungen 69 durchgesteckt werden. Insofern wird mit der vorliegenden Ausführungsform des Exzenterelements 63 eine stufenweise Verdrehung des Exzenterelements 63 und damit stufenweise axiale Verstellung des Sensors 44 ermöglicht.

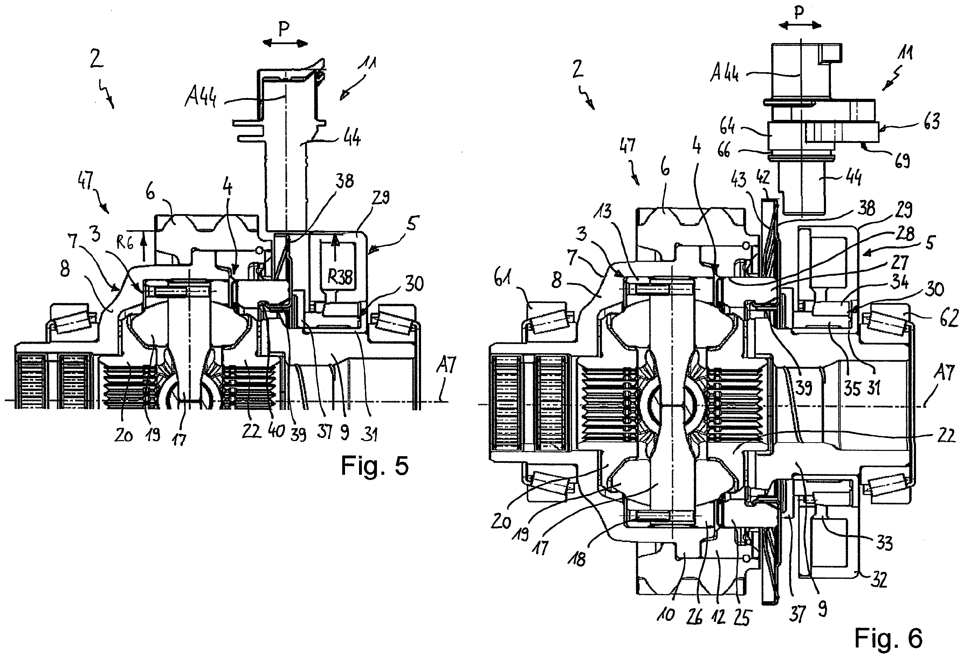

Die Figur 5 zeigt eine erfindungsgemäße Kupplungsanordnung 2 in einer abgewandelten Ausführungsform. Diese Ausführungsform entspricht weitestgehend derjenigen gemäß den Figuren 1 bis 3, auf deren Beschreibung insofern Bezug genommen wird. Dabei sind gleiche Einzelheiten mit gleichen Bezugszeichen versehen wie in den Figuren 1 bis 3, wobei der Einfachheit halber nur ein Teil der Bezugszeichen eingezeichnet ist.

Der einzige Unterschied der vorliegenden Ausführungsform gemäß Figur 5 besteht darin, dass der Sensor 44 auf die Mantelfläche 42 des Geberelements 38 gerichtet ist. Das Geberelement 38 hat einen kleineren Durchmesser beziehungsweise Radius R38 als bei der Ausführungsform gemäß Figur 1, so dass die Anordnung insgesamt kompakter baut. Es ist vorgesehen, dass das radial innen liegende Ende des Sensors 44 zur Drehachse A7 einen Abstand aufweist, beziehungsweise auf einem Radius liegt, der kleiner ist als der Kopfkreisradius und/oder Fußkreisradius des Antriebsrads 6. Ferner kann der Radius R38 des Geberelements 38 kleiner sein als der Fußkreisradius des Antriebsrads 6. Auf diese Weise ist gewährleistet, dass zumindest das Differential 3, die Kupplung 4 und das Geberelement 38 Teile einer vormontierbaren Baueinheit bilden können, wobei die Baueinheit in vormontiertem Zustand in das ortsfeste Gehäuse 41 axial montierbar ist, wobei das Antriebsrad 6 mit einem Antriebsritzel (nicht dargestellt) in Verzahnungseingriff gebracht wird. Die Funktionsweise des Sensors 44 ist dieselbe wie bei der obigen Ausführungsform, auf deren Beschreibung insofern verwiesen wird.

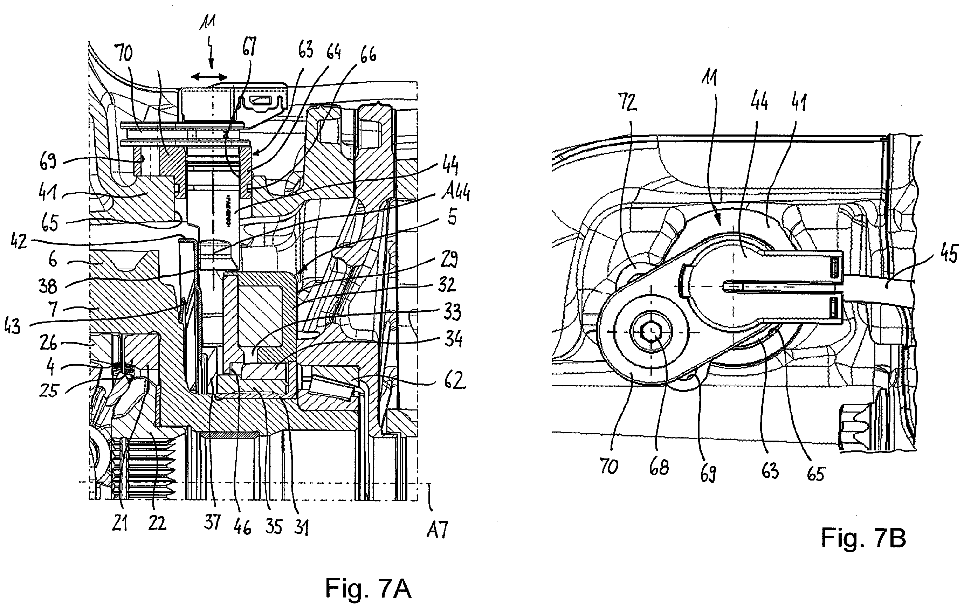

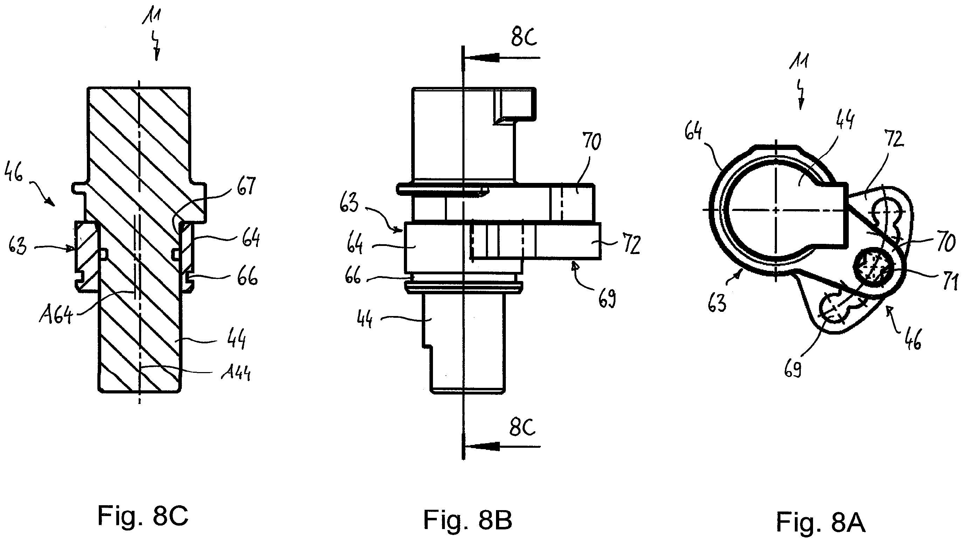

Die Figuren 6 bis 8, welche nachstehend gemeinsam beschrieben werden, zeigen eine erfindungsgemäße Kupplungsanordnung 2 in einer weiteren Ausführungsform. Dabei entspricht die vorliegende Ausführungsform weitestgehend denjenigen gemäß den Figuren 1 bis 4, auf deren Beschreibung hinsichtlich der Gemeinsamkeiten insofern Bezug genommen wird. Dabei sind gleiche beziehungsweise abgewandelte Einzelheiten mit gleichen Bezugszeichen versehen wie in den Figuren 1 bis 4.

Eine Besonderheit der vorliegenden Ausführungsform besteht darin, dass lediglich ein Befestigungselement 68 erforderlich ist, um sowohl die Drehposition des Einstellelements 63 einzustellen als auch dessen Befestigung am ortsfesten Gehäuse 41 zu bewerkstelligen. Hierfür ist vorgesehen, dass der Sensor 44 ein Sensorgehäuse mit einem sich in Bezug auf die Sensorachse A44 nach radial außen erstreckenden Ansatz 70 mit einer axialen Durchgangsbohrung 71 aufweist. Die Durchgangsbohrung 71 des Sensoransatzes 70 fluchtet in Axialansicht mit der Reihe von Durchgangsbohrungen 69 des Einstellelements 63. Ein Verdrehen des Einstell- beziehungsweise Exzenterelements 63 relativ zum Sensor 44 mit daran befestigtem Ansatz 70 bewirkt ein in Bezug auf die Drehachse A7 der Kupplungsanordnung axiales Verschieben des Sensors 44. Eine durch die miteinander fluchtenden Bohrungen 71, 69 in der gewünschten Drehposition durchgestecktes Befestigungselement 68, beispielsweise in Form einer Schraube, fixiert somit den Sensor 44 relativ zum Exzenterelement 63 und legt das Exzenterelement am ortsfesten Gehäuse 41 fest, in das das Befestigungselement 68 eingreift. Die relative Drehposition des Sensors 44 zum ortsfesten Gehäuse 41 bleibt stets unverändert, und zwar unabhängig davon, in welcher Drehstellung sich das Exzenterelement 63 befindet beziehungsweise durch welche Bohrung 69 der Bohrungsreihe das Befestigungselement 68 durchgesteckt wird.

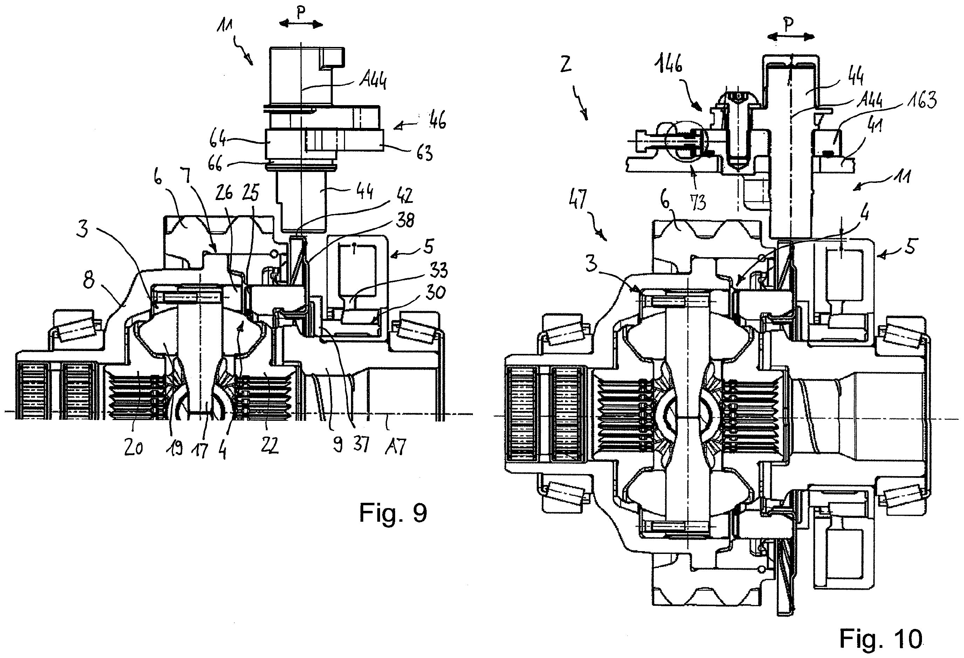

Die Figur 9 zeigt eine erfindungsgemäße Kupplungsanordnung 2 in einer abgewandelten Ausführungsform des Ausführungsbeispiels gemäß den Figuren 6 bis 8, auf deren Beschreibung hinsichtlich der Gemeinsamkeiten insofern Bezug genommen wird. Dabei sind gleiche Einzelheiten mit gleichen Bezugszeichen versehen wie in den Figuren 6 bis 8, wobei der Einfachheit halber nur ein Teil der Bezugszeichen eingezeichnet ist.

Der einzige Unterschied der vorliegenden Ausführungsform gemäß Figur 9 besteht darin, dass der Sensor 44 auf die Mantelfläche 42 des Geberelements 38 gerichtet ist und das Geberelement einen kleineren Durchmesser hat. Insofern ähnelt die vorliegende Ausführungsform gemäß Figur 9 derjenigen gemäß Figur 5, auf deren Beschreibung ebenfalls Bezug genommen wird. Es ist insbesondere vorgesehen, dass das radial innen liegende Ende des Sensors 44 zur Drehachse A7 einen Abstand aufweist, beziehungsweise auf einem Radius liegt, der kleiner ist als der Kopfkreisradius und/oder Fußkreisradius des Antriebsrads 6. Ferner kann der Radius R38 des Geberelements 38 kleiner sein als der Fußkreisradius des Antriebsrads 6. Die Sensoreinheit 11 entspricht derjenigen gemäß den Figuren 6 bis 8.

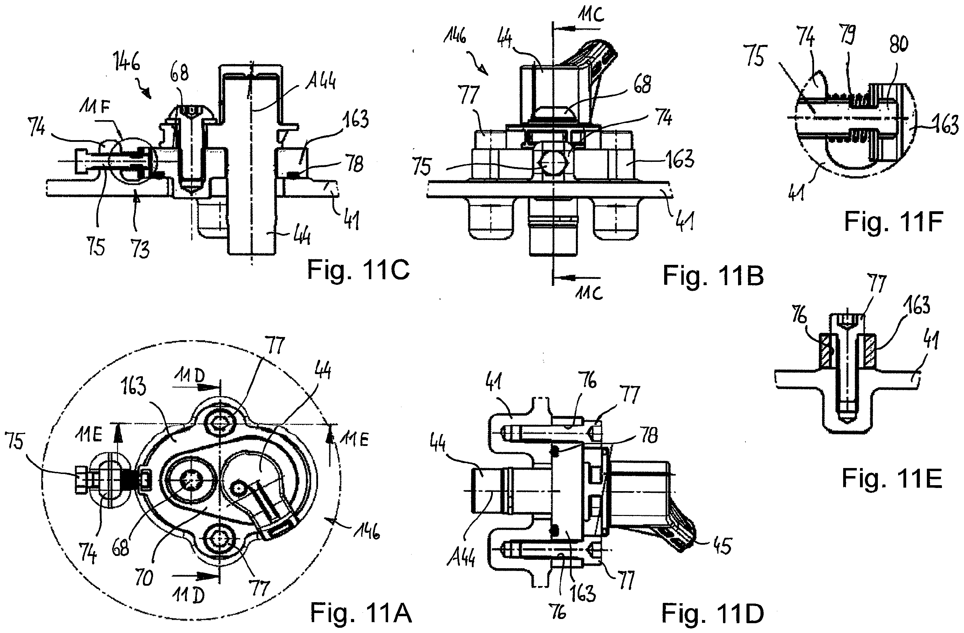

Die Figuren 10 und 11, welche nachstehend gemeinsam beschrieben werden, zeigen eine erfindungsgemäße Kupplungsanordnung 2 in einer weiteren Ausführungsform. Dabei entspricht die vorliegende Ausführungsform in weiten Teilen derjenigen gemäß den Figuren 1 bis 3, auf deren Beschreibung hinsichtlich der Gemeinsamkeiten insofern Bezug genommen wird. Dabei sind gleiche beziehungsweise abgewandelte Einzelheiten mit gleichen beziehungsweise um die Ziffer 100 erhöhten Bezugszeichen versehen wie in den Figuren 1 bis 3.

Eine Besonderheit der vorliegenden Ausführungsform besteht darin, dass die Einstellmittel 146 ein translatorisch verschiebbares Einstellelement 163 aufweisen, in dem der Sensor 44 aufgenommen ist, und einen Rotations-Translations-Wandler 73, mit dem das Einstellelement 163 gegenüber dem ortsfesten Gehäuse 41 axial verschiebbar ist. Die axiale Verstellung erfolgt in diesem Fall durch eine translatorische Bewegung des Einstellelements 163. Der Rotations-Translations-Wandler 73 weist ein mit dem Gehäuse 41 verbundenes, insbesondere einteilig angeformtes Stützelement 74 mit einer axialen Gewindebohrung auf, und eine Stellschraube 75, welche in die Gewindebohrung eingedreht ist. Ein verdicktes Ende 80 der Stellschraube 75 ist mit dem Einstellelement 163 derart verbunden, dass es gegenüber diesem drehbar und verschiebefest ist. Durch Drehen der Stellschraube 75 wird das Einstellelement 163 und mit diesem der Sensor 44 entlang des ortfesten Gehäuses 41 axial bewegt. Der Sensor 44 ist über eine Schraube 68 mit dem Einstellelement 163 fest verbunden. Für eine axial spielfreie Verbindung zwischen dem Einstellelement 163 und der Stellschraube 75 sind Vorspannmittel 79 vorgesehen, die eine Vorspannkraft zwischen den genannten Teilen erzeugen. Die Vorspannmittel 79 sind in Form einer Schraubenfeder gestaltet, welche koaxial zur Stellschraube 75 angeordnet ist. Ein Ende der Feder 79 ist am Einstellelement 163 axial abgestützt und das andere Ende ist am Stützelement 74 axial abgestützt. Zur Führung hat das Einstellelement 163 zwei längliche Führungslöcher 76, durch welche jeweils eine Schraube 77 durchgesteckt und in eine zugehörige Gewindebohrung im Gehäuse 41 eingeschraubt ist. Das Einstellelement 163 ist gegenüber dem Gehäuse 41 mittels einer Dichtung 78 abgedichtet.

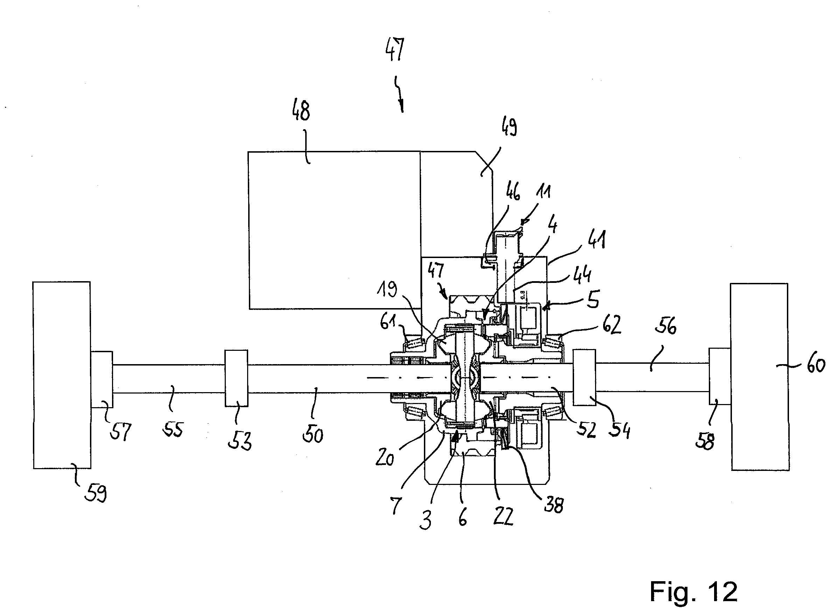

Die Figur 12 zeigt die erfindungsgemäße Kupplungsanordnung 2 gemäß Figur 5 als Teil eines Elektroantriebs 47 in schematischer Darstellung. Der Elektroantrieb 47 umfasst einen Elektromotor 48, der über eine Getriebestufe 49 die Kupplungsanordnung 2, beziehungsweise das Antriebsrad 6 der Kupplungsanordnung 2, antreibt. Von dem Differentialgetriebe 3 wird das bei geschlossener Kupplung 4 eingeleitete Drehmoment auf die beiden Seitenwellenräder 20, 22 übertragen. In die Längsverzahnungen 23 der Seitenwellenräder 20, 22 sind entsprechende Seitenwellen 50, 52 zur Drehmomentübertragung drehfest eingesteckt. An den Enden der Seitenwellen 50, 52 befinden sich Gleichlaufdrehgelenke 53, 54, welche wiederum über Gelenkwellen 55, 56 und Gelenke 57, 58 mit Rädern 59, 60 des Kraftfahrzeugs zur Übertragung eines Drehmoments verbunden sind. Es ist erkennbar, dass die Antriebsanordnung 2 mittels Lagern 61, 62 gegenüber dem stehenden Gehäuse 41 um die Drehachse A7 drehbar gelagert ist. Es versteht sich, dass ein erfindungsgemäßer Elektroantrieb 47 auch jede andere der oben genannten erfindungsgemäßen Kupplungsanordnungen gemäß den Figuren 1 bis 4 und 6 bis 11 aufweisen könnte.

Alle oben genannten Kupplungsanordnungen 2 haben gemein, dass der Sensor 44 einfach montierbar, axial verstellbar und von außen am ortsfesten Gehäuse 41 gut zugänglich ist. Mit Hilfe der Einstellmittel 46, 146 lässt sich die Position des Sensors 44 relativ zum ortsfesten Gehäuse 41 und damit zum Geberelement 38 genau einstellen. Insgesamt wird damit die Position des Geberelements 38 und damit die Schaltstellung der Kupplung 4 genau erkannt.

### Bezugszeichenliste

- 2: Kupplungsanordnung
- 3: Differentialgetriebe
- 4: Kupplung
- 5: Aktuator
- 6: Antriebsrad
- 7: Getriebegehäuse
- 8: erstes Gehäuseteil
- 9: zweites Gehäuseteil
- 10: Flanschabschnitt
- 11: Sensoreinheit
- 12: Flanschabschnitt
- 13: Differentialträger
- 14: Außenfläche
- 15: Flächenabschnitt
- 16: Bohrung
- 17: Zapfen
- 18: Befestigungsmittel
- 19: Differentialräder
- 20: Seitenwellenrad
- 21: Ringabschnitt
- 22: Seitenwellenrad
- 23: Längsverzahnung
- 25: erstes Kupplungsteil
- 26: zweites Kupplungsteil
- 27: Ansatz
- 28: Durchbrüche
- 29: Elektromagnet
- 30: Kolben
- 31: Trägerelement
- 32: Magnetgehäuse
- 33: Spalt
- 34: erstes Kolbenteil
- 35: zweites Kolbenteil
- 36: Schulter
- 37: Gleitring
- 38: Geberelement
- 39: Rastelement
- 40: Hinterschneidung
- 41: ortsfestes Gehäuse
- 42: Mantelabschnitt
- 43: Rückstellfeder
- 44: Sensor
- 45: Kabel
- 46, 146: Einstellmittel
- 47: Antriebsanordnung
- 48: Elektromotor
- 49: Getriebe
- 50: Welle
- 51: Gewindebohrung
- 52: Welle
- 53: Gelenk
- 54: Gelenk
- 55, 56: Gelenkwelle
- 57, 58: Gelenk
- 59, 60: Rad
- 61, 62: Lager
- 63, 163: Einstellelement
- 64: Hülsenabschnitt
- 65: Bohrung
- 66: Ringnut
- 67: Bohrung
- 68: Befestigungsmittel
- 69: Langloch / Lochreihe
- 70: Ansatz
- 71: Durchgangsbohrung
- 72: Ansatz
- 73: Rotations-Translations-Wandler
- 74: Stützelement
- 75: Stellschraube
- 76: Langloch
- 77: Schraube
- 78: Dichtung
- 79: Feder
- 80: Ende
- 81: Schulter

- A: Achse
- P: Pfeil
- R: Radius

## Patentansprüche

1. Kupplungsanordnung umfassend:
ein Gehäuse (41);
ein um eine Drehachse (A7) drehend antreibbares erstes Antriebsteil (7);
ein relativ zum ersten Antriebsteil (7) drehbares zweites Antriebsteil (13);
eine im Leistungspfad zwischen dem ersten Antriebsteil (7) und dem zweiten Antriebsteil (13) angeordnete Kupplung (4) mit einem ersten Kupplungsteil (25), das mit dem ersten Antriebsteil (7) drehfest und axial beweglich verbunden ist, und einem zweiten Kupplungsteil (26), das mit dem zweiten Antriebsteil (13) antriebsverbunden ist;
einen steuerbaren Aktuator (5) zum Betätigen der Kupplung (4) durch axiales Bewegen des ersten Kupplungsteils (25) relativ zum zweiten Kupplungsteil (26);
eine Sensoreinheit (11) zur Ermittlung eines die axiale Position des ersten Kupplungsteils (25) repräsentierendes Positionssignals, wobei die Sensoreinheit (11) einen zumindest mittelbar mit dem ersten Kupplungsteil (25) verbundenes Geberelement (38) und einen Sensor (44) zum Erfassen einer Position des Geberelements (38) aufweist, wobei der Sensor (44) an dem Gehäuse (41) lösbar verbunden ist;
**gekennzeichnet durch** Einstellmittel (46, 146) zum Einstellen der Position des Sensors (44) relativ zum Gehäuse (41), wobei die Einstellmittel (46) ein Einstellelement (63) und zumindest ein Fixierelement aufweisen, wobei das Einstellelement (63) einen Hülsenabschnitt (64) hat, der mit einer zylindrischen Außenfläche in einer Bohrung (65) des ortsfesten Gehäuses (41) drehbar einsitzt, und eine gegenüber der zylindrischen Außenfläche exzentrische Durchgangsbohrung (67), in welcher der Sensor (44) eingesteckt ist, wobei das Einstellelement (63) mittels des Fixierelements in mehreren Drehpositionen mit dem ortsfesten Gehäuse (41) verbindbar ist.

2. Kupplungsanordnung nach Anspruch 1,
**dadurch gekennzeichnet, dass** der Sensor (44) in Bezug auf eine zur Drehachse (A7) senkrechte Ebene einen Winkel einschließt, der 0° bis ± 30° beträgt.

3. Kupplungsanordnung nach Anspruch 1 oder 2,
**dadurch gekennzeichnet, dass** der Sensor (44) und die Einstellmittel (46, 146) derart mit dem Gehäuse (41) verbunden sind, dass sie bei geschlossenem Gehäuse (41) von außen zugänglich sind.

4. Kupplungsanordnung nach einem der Ansprüche 1 bis 3,
**dadurch gekennzeichnet, dass** die Einstellmittel (46, 146) derart gestaltet sind, dass der Sensor (44) gegenüber dem ortsfesten Gehäuse (41) in Bezug auf die Drehachse (A7) des ersten Antriebsteils (7) axial einstellbar ist.

5. Kupplungsanordnung nach Anspruch 4,
**dadurch gekennzeichnet, dass** das Einstellelement (63) ein bogenförmiges Langloch (69) oder eine Reihe von bogenförmig angeordneten Durchgangsbohrungen (69) aufweist.

6. Kupplungsanordnung nach einem der Ansprüche 4 oder 5,
**dadurch gekennzeichnet, dass** genau ein Fixierelement (68) vorgesehen ist, mit dem der Sensor (44) mit dem Einstellelement (63) verbindbar und das Einstellelement (63) an dem Gehäuse (41) in mehreren Drehpositionen befestigbar ist.

7. Kupplungsanordnung nach einem der Ansprüche 1 bis 4,
**dadurch gekennzeichnet, dass** die Einstellmittel (146) ein translatorisch bewegbares Einstellelement (163), mit dem der Sensor (44) befestigt ist, und einen Rotations-Translations-Wandler (73), mit dem das Einstellelement (163) gegenüber dem ortsfesten Gehäuse (41) axial verschiebbar ist, aufweist.

8. Kupplungsanordnung nach Anspruch 7,
**dadurch gekennzeichnet, dass** der Rotations-Translations-Wandler (73) ein mit dem Gehäuse (41) verbundenes Stützelement (74) mit einer axialen Gewindebohrung aufweist, sowie eine Stellschraube (75), welche in die Gewindebohrung eingedreht ist, wobei ein Ende (80) der Stellschraube mit dem Einstellelement (163) verschiebefest verbunden ist.

9. Kupplungsanordnung nach einem der Ansprüche 7 oder 8,
**dadurch gekennzeichnet, dass** Führungsmittel (76, 77) vorgesehen sind, mit denen das Einstellelement (163) gegenüber dem ortsfesten Gehäuse (41) längsverschieblich geführt sind.

10. Kupplungsanordnung nach einem der Ansprüche 7 bis 9,
**dadurch gekennzeichnet, dass** Vorspannmittel (79) vorgesehen sind, mit denen das Einstellelement (163) gegenüber dem Gehäuse (41) zumindest mittelbar axial vorgespannt ist.

11. Kupplungsanordnung nach einem der Ansprüche 1 bis 10,
**dadurch gekennzeichnet, dass** der Aktuator (5) einen ringförmigen Elektromagneten (29), der an dem Gehäuse (41) abgestützt ist, und einen axial beweglichen Kolben (30) aufweist, der mit dem ersten Kupplungsteil (25) wirkverbunden ist, wobei der Elektromagnet (29) ein Magnetgehäuse (32) mit einem größten Außendurchmesser aufweist, wobei das Geberelement (38) einen größten Durchmesser aufweist, die kleiner ist als der größte Außendurchmesser des Magnetgehäuses (32).

12. Kupplungsanordnung nach einem der Ansprüche 1 bis 11,
**dadurch gekennzeichnet, dass** das Geberelement (38) ringförmig gestaltet ist, wobei ein größter Außendurchmesser (D38) des Geberelements (38) kleiner ist als ein Fußkreisdurchmesser eines mit dem ersten Antriebsteil (7) verbundenen Antriebsrads (6).

13. Antriebsanordnung, insbesondere für eine elektromotorisch antreibbare Antriebsachse eines Kraftfahrzeugs, umfassend
eine Kupplungsanordnung (2) nach einem der Ansprüche 1 bis 12,
ein Differentialgetriebe (3) mit Ausgleichsrädern (19) und Seitenwellenrädern (20, 22);
wobei das erste Antriebsteil (7) in Form eines Kupplungsgehäuses und das zweite Antriebsteil (13) in Form eines Differentialträgers gestaltet sind, mit dem die Ausgleichsräder (19) verbunden sind.

14. Antriebsanordnung nach Anspruch 13,
**dadurch gekennzeichnet, dass** ein Elektromotor zum Antreiben der Antriebsanordnung vorgesehen ist.

## Claims

1. A clutch assembly comprising
a housing (41);
a first drive part (7) rotatingly drivable around an axis of rotation (A7);
a second drive part (13) rotatable relative to the first drive part (7);
a clutch (4) which is arranged in the power path between the first drive part (7) and the second drive part (13) and which comprises a first clutch part (25) that is connected to the first drive part (7) in a rotationally fixed and axially movable way and a second clutch part (26) that is drivingly connected to the second drive part (13);
a controllable actuator (5) for actuating the clutch (4) by axially moving the first clutch part (25) relative to the second clutch part (26);
a sensor unit (11) for determining a position signal which represents an axial position of the first clutch part (25), wherein the sensor unit (11) comprises a target element (38) which is at least indirectly connected to the first clutch part (25) and a sensor (44) for sensing a position of the target element (38), wherein the sensor (44) is releasably connected to the housing (41);
**characterised by**
adjusting means (46, 146) for adjusting the position of the sensor (44) relative to the housing (41), wherein the adjusting means (46) comprise an adjusting element (63) and at least one fixing element, wherein the adjusting element (63) comprises a sleeve portion (64) which, with a cylindrical outer face, is rotatably positioned in a bore (65) of the stationary housing (41), and a through-bore (67) which is eccentric relative to the cylindrical outer face and into which the sensor (44) is inserted, wherein the adjusting element (63) is connectable to the stationary housing (41) in several rotational positions by the fixing element

2. A clutch assembly according to claim 1,
**characterised in that**, with reference to a plane which extends perpendicularly to the axis of rotation (A7), the sensor (44) encloses an angle which amounts to 0 to ± 30 degrees.

3. A clutch assembly according to claim 1 or 2,
**characterised in that** the sensor (44) and the adjusting means (46, 146) are connected to the housing (41) such that they are accessible from outside when the housing (41) is closed.

4. A clutch assembly according to any one of claims 1 to 3,
**characterised in that** the adjusting means (46, 146) are designed such that, with respect to the axis of rotation (A7) of the first drive part (7), the sensor (44) can be axially adjusted relative to the stationary housing (41).

5. A clutch assembly according to claim 4,
**characterised in that** the adjusting element (63) comprises an arch-shaped oblong hole (69) or a row of through-bores (69) which are arranged in an arch-shaped way.

6. A clutch assembly according to any one of claims 4 or 5,
**characterised in that** exactly one fixing element (68) is provided by which the sensor (44) is connectable to the adjusting element (63) and by which the adjusting element (63) is fixable to the housing (41) in several rotational positions.

7. A clutch assembly according to any one of claims 1 to 4,
**characterised in that** the adjusting means (146) comprise a translatorily movable adjusting element (163) by which the sensor (44) is fixed, and a rotation-translation convertor (73) by which the adjusting element (163) is axially displaceable relative to the stationary housing (41).

8. A clutch assembly according to claim 7,
**characterised in that** the rotation-translation convertor (73) comprises a supporting element (74) which is connected to the housing (41) and which comprises an axial threaded bore, and an adjusting screw (75) which is threaded into the threaded bore, wherein an end (80) of the adjusting screw is connected to the adjusting element (163) in a non-displaceable way.

9. A clutch assembly according to any one of claims 7 or 8,
**characterised in that** guiding means (76, 77) are provided by which the adjusting element (163) is longitudinally displaceably guided relative to the stationary housing (41).

10. A clutch assembly according to any one of claims 7 to 9,
**characterised in that** pre-tensioning means (79) are provided by which the adjusting element (163) is at least indirectly axially pre-tensioned relative to the housing (41).

11. A clutch assembly according to any one of claims 1 to 10,
**characterised in that** the actuator (5) comprises an annular electro-magnet (29) which is supported on the housing (41), and an axially movable piston (30) which is operatively connected to the first clutch part (25), wherein the electro-magnet (29) comprises a magnet housing (32) with a greatest outer diameter, wherein the target element (38) comprises a greatest diameter which is smaller than the greatest outer diameter of the magnet housing (32).

12. A clutch assembly according to any one of claims 1 to 11,
**characterised in that** the target element (38) is annularly formed, wherein a greatest outer diameter (D38) of the target element (38) is smaller than a root diameter of a driving gear (6) connected to the first drive part (7).

13. A drive assembly, in particular for an electro-motively drivable driving axle of a motor vehicle, comprising:
a clutch assembly (2) according to any one of claims 1 to 12;
a differential drive (3) with differential gears (19) and
sideshaft gears (20, 22);
wherein the first drive part (7) is provided in the form of a clutch housing and the second drive part (13) in the form of a differential carrier to which the differential gears (19) are connected.

14. A drive assembly according to claim 13,
**characterised in that** an electric motor is provided for driving the drive assembly.

## Revendications

1. Ensemble de couplage comprenant :
un boîtier (41),
une première partie d'entraînement (7) pouvant être entraînée en rotation autour d'un axe de rotation (A7),
une deuxième partie d'entraînement (13) pouvant tourner par rapport à la première partie d'entraînement (7),
un couplage (4) disposé dans le chemin de la puissance entre la première partie d'entraînement (7) et la deuxième partie d'entraînement (13) avec une première partie de couplage (25) qui est reliée solidaire en rotation et axialement mobile à la première partie d'entraînement (7) et une deuxième partie de couplage (26), qui est reliée en entraînement à la deuxième partie d'entraînement (13),
un actionneur pilotable (5) pour actionner le couplage (4) par déplacement axial de la première partie de couplage (25) par rapport à la deuxième partie de couplage (26),
une unité de capteur (11) pour établir un signal de position représentant la position axiale de la première partie de couplage (25), l'unité de capteur (11) comportant un élément détecteur (38) relié au moins indirectement à la première partie de couplage (25) et
un capteur (44) pour la saisie d'une position de l'élément détecteur (38), le capteur (44) étant relié de façon amovible au boîtier (41),
**caractérisé par** des moyens de réglage (46,146) pour régler la position du capteur (44) par rapport au boîtier (41), le moyen de réglage (46) comportant un élément de réglage (63) et au moins un élément de fixation, l'élément de réglage (63) ayant une section de manchon (64), qui est insérée pouvant tourner avec une surface extérieure cylindrique dans un alésage (65) du boîtier fixe (41) et un alésage de passage (67) excentrique vis-à-vis de la surface extérieure cylindrique, dans lequel le capteur (44) est emboîté,
l'élément de réglage (63) pouvant être raccordé au moyen de l'élément de fixation dans plusieurs positions de rotation au boîtier fixe (41).

2. Ensemble de couplage selon la revendication 1, **caractérisé en ce que** le capteur (44) forme un angle par rapport à un plan vertical à l'axe de rotation (A7), qui est de 0 à ± 30°.

3. Ensemble de couplage selon la revendication 1 ou 2, **caractérisé en ce que** le capteur (44) et les moyens de réglage (46, 146) sont reliés au boîtier (41) de telle manière qu'ils sont accessibles de l'extérieur lorsque le boîtier (41) est fermé.

4. Ensemble de couplage selon l'une quelconque des revendications 1 à 3, **caractérisé en ce que** les moyens de réglage (46, 146) sont structurés de telle manière que le capteur (44) peut être réglé axialement vis-à-vis du boîtier fixe (41) par rapport à l'axe de rotation (A7) de la première partie d'entraînement (7).

5. Ensemble de couplage selon la revendication 4, **caractérisé en ce que** l'élément de réglage (63) comporte un trou oblong en forme d'arc (69) ou une rangée de trous de passage (69) disposés en forme d'arc.

6. Ensemble de couplage selon l'une quelconque des revendications 4 ou 5, **caractérisé en ce qu'**exactement un élément de fixation (68) est prévu avec lequel le capteur (44) peut être raccordé à l'élément de réglage (63) et l'élément de réglage (63) peut être fixé au boîtier (41) dans plusieurs positions de rotation.

7. Ensemble de couplage selon l'une quelconque des revendications 1 à 4, **caractérisé en ce que** le moyen de réglage (146) comporte un élément de réglage (163) pouvant effectuer un mouvement translatoire avec lequel le capteur (44) est fixé et un convertisseur rotation-translation (73) avec lequel l'élément de réglage (163) peut être déplacé axialement vis-à-vis du boîtier fixe (41) .

8. Ensemble de couplage selon la revendication 7, **caractérisé en ce que** le convertisseur rotation-translation (73) comporte un élément de soutien (74) relié au boîtier (41) avec un alésage fileté axial ainsi qu'une vis de réglage (75), laquelle est vissée dans l'alésage fileté, une extrémité (80) de la vis de réglage étant reliée solidaire en déplacement à l'élément de réglage (163).

9. Ensemble de couplage selon l'une quelconque des revendications 7 ou 8, **caractérisé en ce que** des moyens de guidage (76,77) sont prévus avec lesquels l'élément de réglage (163) est guidé en déplacement longitudinal vis-à-vis du boîtier fixe (41).

10. Ensemble de couplage selon l'une quelconque des revendications 7 à 9, **caractérisé en ce que** des moyens de précontrainte (79) sont prévus avec lesquels l'élément de réglage (163) est précontraint axialement au moins indirectement vis-à-vis du boîtier (41).

11. Ensemble de couplage selon l'une quelconque des revendications 1 à 10, **caractérisé en ce que** l'actionneur (5) comporte un électro-aimant de forme annulaire (29), qui est appuyé sur le boîtier (41) et un piston (30) axialement mobile, qui est relié fonctionnellement à la première partie de couplage (25), l'électro-aimant (29) comportant un boîtier magnétique (32) avec un diamètre extérieur maximal, l'élément détecteur (38) comportant un diamètre maximal qui est plus petit que le diamètre extérieur maximal du boîtier magnétique (32).

12. Ensemble de couplage selon l'une quelconque des revendications 1 à 11, **caractérisé en ce que** l'élément détecteur (38) est structuré de forme annulaire, un diamètre extérieur maximal (D38) de l'élément détecteur (38) étant plus petit qu'un diamètre de pied de denture d'une roue d'entraînement (6) reliée à la première partie d'entraînement (7).

13. Ensemble d'entraînement, notamment pour un essieu moteur d'un véhicule automobile, pouvant être entraîné par un moteur électrique, comprenant
un ensemble de couplage (2) selon l'une quelconque des revendications 1 à 12,
un différentiel (3) avec des pignons de différentiel (19) et des pignons d'arbre de renvoi (20,22),
la première partie d'entraînement (7) étant conçue sous la forme d'un carter d'embrayage et la deuxième partie d'entraînement (13) sous la forme d'un support de différentiel avec lequel les pignons de différentiel (19) sont reliés.

14. Ensemble d'entraînement selon la revendication 13, **caractérisé en ce qu'**un moteur électrique est prévu pour entraîner l'ensemble d'entraînement.
